# EUROPEAN PATENT SPECIFICATION

(11) **EP 2 537 817 B1**
(45) Date of publication and mention of the grant of the patent: **12.03.2014**
(21) Application number: 12169606.6
(22) Date of filing: 25.05.2012
(51) Int. Cl.: C04B 24/28, C08G 59/00, C08J 3/12, C08L 63/00

(54) **Redispersible epoxy powder**
Redispergierbares Expoxypulver
Poudre époxy redispersable

(30) Priority: 23.06.2011 US 201161500276 P
(43) Date of publication of application: 26.12.2012
(73) Proprietor: Dow Global Technologies LLC, Midland, MI 48674 (US)
(72) Inventor: Hong, Liang, Midland, MI Michigan 48640 (US); Sekharan, Maneh Nadupparambil, Midland, MI Michigan 48642 (US); Radler, Michael John, Saginaw, MI Michigan 48638 (US)
(74) Representative: Buckley, Guy Julian

(56) References cited:
- EP-A1- 0 723 975
- EP-A1- 1 754 751
- US-A1- 2001 024 644
- US-A1- 2010 197 831

## Description

### FIELD OF THE INVENTION

The present invention relates to redispersible polymer powder compositions which are prepared from an epoxy resin and a colloidal stabilizer for use in cement compositions.

### BACKGROUND OF THE INVENTION

In construction applications, mortars may be prepared with cement, sand, and organic polymer. To reduce shipping costs, the polymer can be shipped and added in dry form as a redispersible polymer powder. Redispersible polymer powders are used as binders to improve the adhesion of cementitious adhesive formulations. The powdered form of the polymer is generally produced by spray drying a liquid polymer composition to obtain a free flowing powder. To perform its function in the application formulation to which it is added, such as concrete, it is desired that in the application formulation the polymer powder is easily redispersible.

Redispersible polymer powders made from emulsion polymers, such as vinyl acetate/ethylene copolymers, various acrylic polymers, styrene/butadiene copolymers, and vinyl acetate/versatic acid vinyl ester copolymers are widely used in various construction applications, such as cement based tile adhesives (CBTA), and self level flooring compounds (SLFC) to improve the mechanical properties of the cementitious composition. To further improve mechanical and chemical properties such as hydraulic stability, compression, abrasion resistance, solvent resistance, and chemical and stain resistance of cementitious compositions, it would be desirable to make redispersible polymer powders from crosslinkable polymers.

Epoxies are crosslinkable polymers which are used to impart toughness, reduced water permeability, rapid setting, and chemical and stain resistance to cementitious materials including concrete. Epoxies are also used in the repair of concrete and cement mortars and render or coatings. Epoxy functional groups have been incorporated into the emulsion polymers, such as by the use of glycidyl methacrylate, and a polymerizable epoxy functional monomer or by blending a very low molecular weight liquid epoxy with an acrylic latex prior or after the polymerization step. However, the epoxy functional group content has been low with little gain in desirable properties which may be potentially imparted by a crosslinkable polymer. Another approach is to use a water borne epoxy emulsion or liquid epoxy resin, and a water borne hardener for combining with cement, which is a three-part system, but it is difficult to handle in terms of transportation, mixing, pot-life, equipment contamination, etc. It has been found that drying of a liquid epoxy resin or liquid epoxy emulsion, even with drying aids and anti-caking agents, results in unredispersible lumps instead of a powder.

U.S. Patent No. 4,123,403 to Warner et al discloses the preparation of an aqueous epoxy resin microsuspension having controlled particle size by a continuous extrusion process. The polymer to be dispersed may be any normally solid, e.g., melting above about 20°C, preferably between about 50°C and about 200°C, and especially between about 80°C and about 200°C, thermoplastic resin whose degradation point is at a somewhat higher temperature than its melting point. It is disclosed that the polymer to be dispersed need not be pure polymer, and for example the heat plastified polymer can contain conventional additives such as pigments, dyes, fillers, stabilizers, fire retardants, emulsifying agents, and the like. Preferred emulsifiers are those that function as protective colloids, such as a polyvinyl alcohol, preferably having a molecular weight of at least about 50,000, especially of at least about 100,000. The mechanical dispersion may be conducted at a temperature which is at least 20°C, especially at least 40°C above the melting point of the resin, where the melting point is defined as the temperature at which the resin undergoes a phase change from a solid to a flowable viscous liquid. It is disclosed that finely divided polymer powder can be obtained from the aqueous polymer microsuspensions by dewatering the microsuspension in a conventional manner, such as by filtration, centrifugation, evaporation and spray drying. The powders, it is disclosed, can be employed in an electrostatic coating or printing process and as plastic pigments in paper coatings.

In Example 1 of the Warner et al patent, an aqueous solution of polyvinyl alcohol of about 120 kg mol⁻¹, 88% hydrolyzed is used at 5.7 wt% polyvinyl alcohol relative to solid epoxy resin, which has a softening point of 72°C, and the mechanical dispersion process is carried out at a temperature at conversion from polymer-continuous to polymer-discontinuous of about 102°C. The volume average particle diameter of the dispersed solid polymer particles after cooling is about 0.55 micron. However, while the resin has a softening point of 72°C, the glass transition temperature is significantly lower, and the polymer particles produced would exhibit poor redispersibility. Additionally, Warner et al does not disclose use of a spray dried, redispersible polymer powder in a cementitious composition.

In the present invention, it has been surprisingly found, that use of a thermosettable or crosslinkable epoxy resin having a high glass transition temperature (Tg) with a polyvinyl alcohol as a colloidal stabilizer or spray drying aid unexpectedly provides both excellent redispersibility and significant stability in cement applications.

### SUMMARY OF THE INVENTION

The present invention provides a redispersible polymer powder (RDP) comprised of a co-dried admixture of a thermosettable epoxy resin having a glass transition temperature (Tg) of at least 50°C, preferably at least 55°C, more preferably at least 60°C, for example from 60°C to 150°C, generally from 60°C to 125°C, and a colloidal stabilizer comprising a polyvinyl alcohol in an amount of the polyvinyl alcohol of at least 2% by weight, preferably from 5% by weight to 35% by weight, more preferably from 6% by weight to 25% by weight, based upon the weight of the thermosettable epoxy resin. In accordance with the present invention, the RDP may or may not contain a hardener or curing agent. In embodiments, curing agents or hardeners may be formulated into the system by dry mixing with the crosslinkable epoxy powder which is produced by spray drying, but not before spray drying. In accordance with the present invention, the RDP may be hardened, cured, or crosslinked by cement ingredients when admixed with water. The water redispersible polymer powder of the present invention exhibits unexpectedly superior redispersibility and good stability in cementitious formulations. The thermosettable epoxy resin may have an average particle size of from 0.05µm to 5µm, preferably from 0.1µm to 3µm, most preferably from 0.15µm to 2µm.

In an aspect of the present invention, the redispersible polymer powder may be produced by drying an aqueous mixture of the thermosettable epoxy resin and the colloidal stabilizer comprising the PVOH to obtain the water redispersible polymer powder. An aqueous dispersion of the thermosettable epoxy resin may be provided by mechanical dispersion or by melt kneading, or any other high shear mixing technology, and the colloidal stabilizer may be admixed with the thermosettable epoxy resin before and/or during formation of the aqueous dispersion of the thermosettable epoxy resin. Additional stabilizer may be post added to the aqueous dispersion after it is formed. Then the aqueous dispersion of the thermosettable epoxy resin and the colloidal stabilizer may be spray dried to obtain the water redispersible polymer powder. The aqueous dispersion of the thermosettable epoxy resin and the redispersible polymer powder are obtained without curing, crosslinking or hardening of the thermosettable epoxy resin, and without a hardener or curing agent for the thermosettable epoxy resin. Use of PVOH, preferably partially hydrolyzed PVOH, as a colloidal stabilizer with a thermosettable epoxy resin having a glass transition temperature (T_{g}) of at least 50°C, provides excellent redispersibility for thermosettable epoxy resins without adversely affecting spray drying while achieving good stability in cement based compositions.

In another aspect of the present invention, a dry mix formulation, or a cement composition such as a cement based tile adhesive, may be produced by admixing cement ingredients with the water redispersible polymer powder made from a thermosettable, curable, hardenable epoxy resin to obtain a composition, such as a dry mortar mix, which exhibits good stability in dry form. The crosslinkable epoxy resin or redispersible polymer powder may be cured, crosslinked or hardened by the cement ingredients when the dry mix composition is admixed with water but not prior to admixing with water.

### DETAILED DESCRIPTION OF THE INVENTION

Unless otherwise indicated, all temperature and pressure units are room temperature and standard pressure (STP). All ranges recited are inclusive and combinable.

All phrases comprising parentheses denote either or both of the included parenthetical matter and its absence. For example, the phrase "(meth)acrylate" includes, in the alternative, acrylate and methacrylate. methacrylic, and mixtures thereof.

As used herein, unless otherwise indicated, the phrase "molecular weight" refers to a number average molecular weight as measured in a conventional manner. The number average molecular weight is the ordinary arithmetic mean or average of the molecular weights of the individual macromolecules. It is determined by measuring the molecular weight of n polymer molecules, summing the weights, and dividing by n. The number average molecular weight of a polymer can be determined by gel permeation chromatography, viscometry (Mark-Houwink equation), and all colligative methods like vapor pressure osmometry or end-group determination. For polyvinyl alcohol, the PVOH molecular weight, unless otherwise indicated, means the mean weight of the molar masses, Mw, determined by gel permeation chromatography (GPC) combined with static light scattering (absolute method) on re-acetylized specimens. The accuracy of the Mw values is estimated at ±15%. For epoxy resins, unless otherwise indicated, the molecular weight may mean the formula weight.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, unless otherwise indicated, the measured glass transition temperature (Tg) is used. As used herein the term "calculated Tg" refers to the Tg of a polymer calculated by using the Fox equation (T. G. Fox, Bull. Am. Physics Soc., Volume 1, Issue No. 3, page 123 (1956). As used herein the term "measured Tg" means a Tg that is measured using differential scanning calorimetry or DSC (rate of heating 10°C per minute, Tg taken at the midpoint of the inflection.)

As used herein, the phrase "wt.%" stands for weight percent.

As used herein, unless otherwise indicated, the phrase "average particle size", refers to the particle diameter or the largest dimension of a particle in a distribution of powder particles as determined by laser light scattering such that 50 wt. % of the particles in the distribution are smaller than the particle and 50 wt.% of the particles in the distribution are larger than the particle. The particle size distribution may be measured using a Coulter LS 230 particle size analyzer, a product of Beckman Coulter (Brea, California) per manufacturer's recommended Procedures via laser scattering. The scattering light from particles through laser scattering and polarization intensity differential scattering is collected as a function of angle, and subsequently converted to a particle size distribution.

The present inventors have found that cross-linkable redispersible polymer powders, which can be cross-linked, cured or hardened by cement ingredients upon water addition, rather than by epoxy hardeners or curing agents which are generally employed with epoxy resins, can be produced by use of a thermosettable, non-hardened or non-cured epoxy resin having a glass transition temperature (Tg) of at least 50°C, and a colloidal stabilizer comprising a polyvinyl alcohol, preferably a partially hydrolyzed polyvinyl alcohol, in an amount of the polyvinyl alcohol of at least 2% by weight, based upon the weight of the thermosettable epoxy resin. Although curing of the epoxy is preferred by cement ingredients, it is possible to add epoxy curing agents such as an amine, mercaptan, or anhydride curing agent into a cement-epoxy powder mixture. The redispersible epoxy powders of the present invention may be produced by spray drying, exhibit excellent redispersibility, and improve mechanical and chemical properties such as hydraulic stability, compression, abrasion resistance, solvent resistance, and chemical and stain resistance of cementitious compositions.

Within the meaning of the present invention an epoxy resin for use herein is a polyglycidyl ether of a polyhydroxy compound, such as a monomeric polyhydroxy compound e.g. a polyhydroxy hydrocarbon, or a hydroxyl-functional oligomer. Preferably, the polyglycidyl ether is an oligomeric or polymeric compound having at least 2 hydroxyl groups. Generally, the epoxy resin is the reaction product of a polyhydroxy compound, such as a monomeric polyhydroxy compound e.g. a polyhydroxy hydrocarbon, or a hydroxyl-functional oligomer, with an epihalohydrin, such as epichlorohydrin. The polyhydroxy hydrocarbon can be substituted, if desired, with one or more non-interfering substituents, such as halogen atoms, ether radicals, lower alkyls and the like. Examples of polyhydroxy hydrocarbons include polyhydric phenols and polyhydric alcohols. Specific nonlimiting examples of monomeric polyhydroxy compounds are resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, tetramethylbiphenol, tetramethyl-tetrabromobiphenol, tetramethyltribromobiphenol, tetrachlorobisphenol A, 4,4'- sulfonyldiphenol, 4,4-oxydiphenol, 4,4'-dihydroxybenzophenone, 9,9'- bis(4-hydroxyphenyl)fluorine, 4,4'-dihydroxybiphenyl, and 4, 4'-dihydroxy-α-methylstilbene. Examples of hydroxyl-functional oligomers include phenol-formaldehyde novolak resins, alkyl substituted phenol-formaldehyde resins, phenol-hydroxybenzaldehyde resins, cresol-hydroxybenzaldehyde resins, dicyclopentadiene-phenol resins, and dicyclopentadiene-substituted phenol resins. The polyglycidyl ethers can be prepared in conventional manner by reacting an epihalohydrin, preferably epichlorohydrin, with the polyhydroxy compound including a halogenated polyhydroxy compound under such conditions to prepare the desired product. Such preparations are well known in the art (see for example US-A-5,118,729). Modified epoxy resins such as epoxy resins wherein the above mentioned fundamental reactants have been substituted by other compounds are also encompassed by the term "epoxy resin." Oligomers and polymers obtained by free radical polymerization of monomer mixtures comprising ethylenically unsaturated epoxy compounds are not included by the definition of epoxy resin herein.

In accordance with the present invention the polyhydroxy compound used to prepare the epoxy resin is a polyhydroxy hydrocarbon, preferably an aromatic dihydroxy compound, such as bisphenol A and/or bisphenol F. An oligomeric compound such as a phenol-formaldehyde novolac may be used as polyhydroxy compound. Preferred examples of epoxy resins for use in the present invention include the diglycidyl ether of bisphenol A which is an oligomer of diglycidylether of bisphenol A, typically the reaction product of epichlorohydrin and bisphenol A; the diglycidyl ether of bisphenol F which is an oligomer of diglycidyl ether of bisphenol F, typically the reaction product of epichlorohydrin and bisphenol F, a mixed diglycidyl ether of bisphenol A and F, which is an oligomer of diglycidyl ether of bisphenol A and F, typically the reaction product of epichlorohydrin and a mixture of bisphenol A and F; the diglycidyl ether of a phenol-formaldehyde novolak, typically the reaction product of epichlorohydrin and a phenol-formaldehyde novolak; and modified epoxy resins such as epoxy resins, e.g. bisphenol A based epoxy resins, modified with an epoxy functional surfactant, typically an epoxy functional nonionic or epoxy functional anionic surfactant, and/or poly(alkylene glycol) epoxide, typically poly(propylene glycol) epoxide or poly(ethylene glycol) epoxide. In embodiments of the invention, the thermosettable epoxy resin is a linear, non-cross-linked polymer of bisphenol A and epichlorohydrin having terminal epoxide groups. A specific example of a thermosettable epoxy resin which may be employed herein is D.E.R. 664U, a solid epoxy resin of medium molecular weight, which is the solid reaction product of epichlorohydrin and bisphenol A, having a softening point of 100°C to 110°C, commercially available from The Dow Chemical Company, Midland, Michigan, U.S.A..

Preferably, the epoxide equivalent weight of the epoxy resin may be from 600g/eq to 15,000g/eq, more preferably from 800g/eq to 10,000g/eq, most preferably from 850g/eq to 5,000g/eq as determined according to ASTM D 1652.

The monomers, comonomers or compounds and their weight proportions and amounts may be chosen so as to make a thermosettable epoxy resin having a glass transition temperature (Tg) of at least 50°C, preferably at least 55°C, more preferably at least 60°C, for example from 60°C to 150°C, generally from 60°C to 125°C. It has been found that if the T_{g} of the epoxy resin is below 50°C, redispersibility of the spray dried powder decreases with lumping tending to occur. If the Tg is too high for use in cement compositions, end use properties may suffer, such as flexibility, and film-forming properties, especially in cold temperatures. The T_{g} of the copolymers can be determined in a known manner by differential scanning calorimetry (DSC).

It is understood that the polymer composition according to the present invention may comprise a single epoxy polymer or a mixture or blend of various epoxy polymers as described above.

In accordance with the present invention, the colloidal stabilizer may include a polyvinyl alcohol (PVOH) alone, or in combination with other conventional colloidal stabilizers, which do not adversely affect spray drying. In other embodiments of the invention, a non-PVOH colloidal stabilizer which acts as a surfactant at a high temperature, and is capable of dispersing the epoxy resin in water at a temperature above the Tg of the epoxy resin, such as above 100 °C, may be used without PVOH. PVOH which may preferably be employed in the present invention may have a viscosity DIN 53015 ranging from 2 ± 0.5 mPa-s to 18 ± 0.5 mPa-s (4% aqueous solution at 20°C) or more, a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O), such as MOWIOL 4-88, MOWIOL 8-88, MOWIOL 13-88 and MOWIOL 18-88, which are each commercially available from Kuraray Europe GmbH, Division PVA/PVB D-65926 Frankfurt am Main, Germany. A commercially available PVOH which is particularly preferred for its low viscosity and good stability for use in the present invention is MOWIOL 4-88, which is a partially hydrolyzed PVOH (polyvinylalcohol) in granular form, having a viscosity DIN 53015 of 4 ± 0.5 mPa-s (4% aqueous solution at 20°C), a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O). Preferably, the PVOH employed as a colloidal stabilizer for achieving excellent dispersibility and redispersibility of the epoxy resin is a partially hydrolyzed PVOH, such as MOWIOL 4-88 and MOWIOL 18-88.

The colloidal stabilizer, such as polyvinyl alcohol alone, or in combination with another colloidal stabilizer may be employed in an amount such that the polyvinyl alcohol is at least 2% by weight, preferably from 5% by weight to 35% by weight, more preferably from 6% by weight to 25% by weight, based upon the weight of the thermosettable epoxy resin. It has been found that if the amount of the polyvinyl alcohol is below 2% by weight, redispersibility of the spray dried powder decreases and lumping may occur.

Exemplary of other protective colloids which may employed with the polyvinyl alcohol; are polyvinyl acetals; polyvinylpyrrolidones; polysaccharides in water-soluble form, e.g. starches (amylose and amylopectin), celluloses and their carboxymethyl, methyl, hydroxyethyl and hydroxypropyl derivatives; proteins such as casein or caseinate, soy protein, gelatins; lignin sulfonates; synthetic polymers such as poly(meth)acrylic acid, copolymers of (meth)acrylates with carboxyl-functional comonomer units, poly(meth)acrylamide, polyvinylsulfonic acids and their water-soluble copolymers; melamine formaldehyde sulfonates, naphthaleneformaldehyde sulfonates, and styrene-maleic acid and vinyl ether-maleic acid copolymers. However, use of a polyvinyl alcohol alone is preferred for use as the colloidal stabilizer in the present invention.

An epoxy resin is generally not produced as an aqueous dispersion. It is rather necessary to convert any liquid or semi-solid or solid epoxy resin into an aqueous dispersion by well-known methods and apparatus such as mechanical dispersion or melt kneading, or any other methods and apparatus of high shear technology. The methods and apparatus employed may provide heat and/or shear to heat an epoxy with a Tg of 50°C or more to make a liquid epoxy for preparing the aqueous dispersion. Exemplary methods for preparing stable aqueous epoxy resin dispersions are described in U.S. Patent Application Publication No.-2010/0174016 to Michalski et al, especially in paragraphs [0028] - [0029], and U.S. Patent Application Publication No. 2007/0292705 to Monela et al, especially in paragraph [0030], the disclosures of which are each incorporated herein in their entireties. Methods of mechanical dispersion that can be applied herein are also disclosed in, for example, U.S. Patent Nos. 3,360,599, 3,503917, 4,123,403, 5,037,864, and 5,539,021, the disclosures of which are each herein incorporated by reference in their entireties. Surfactants may be needed to prepare the epoxy resin dispersion. Exemplary surfactants which may employed are disclosed in U.S. Patent Application Publication No.-2010/0174016. Exemplary of mechanical dispersion equipment which may be employed is a pressurized high shear device such as a PARR reactor (manufactured by The Parr Instrument Company, Moline Illinois) with high shear mixing blades e.g. Cowles blades, a modified extruder system, or rotor stator device. For example, a PARR stainless steel pressure reactor with a Cowles blade, or stirrer blade with serrated teeth, equipped with an optional pulley system to allow mixer speeds of up to 1825 rpm, and heating and cooling devices may be employed to make the aqueous dispersions of epoxy resin and PVOH. The epoxy resin and an aqueous solution of the PVOH may be charged into the PARR pressure reactor. The reactor may be sealed and heated to heat the epoxy resin above its T_{g} and produce a liquid epoxy, for example to 100°C, or more. After reaching the temperature the mixture may be stirred for a sufficient amount of time to allow sufficient mixing of the epoxy resin and PVOH solution, for example, at about 1825 rpm. To this mixture water may be added using a HPLC pump, to obtain a substantially homogeneous mixture. Water addition may be continued while cooling the reactor by air and water, down to a temperature of, for example 50 °C, with stirring being maintained during the cooling process, to obtain a substantially homogeneous dispersion. The resultant dispersion may be collected by filtration through a 190 µm filter. Also, in accordance with the present invention, an epoxy dispersion may be made by extrusion of the epoxy resin and polyvinyl alcohol (PVOH). For example, an aqueous solution of polyvinyl alcohol may be delivered to the initial water (IA) injector of an extruder, such as a Bersdorff extruder. The epoxy resin may be fed to the extruder using a loss-in-weight feeder. The melt zone of the extruder may be maintained below the softening temperature of the epoxy resin to prevent epoxy resin flakes from caking at the bottom of the feed throat and the melt seal from rupturing. The barrel temperatures may be set substantially above the Tg of the epoxy resin, e.g. they may be all initially set to 130 °C for an epoxy resin having a T_{g} of 61°C, and subsequently reduced. For example, a melt zone temperature of 75 °C, an emulsification zone of 110°C and a dilution zone of 100 °C may be employed to produce the smallest amount of grit.

In accordance with the present invention, the thermosettable epoxy resin may have an average particle size of from 0.05µm to 5µm, preferably from 0.1µm to 3µm, most preferably from 0.15µm to 2µm. The solids content of the epoxy resin dispersion may generally be from 30% by weight to 75% by weight.

In embodiments of the invention, the colloidal stabilizer may be admixed with the thermosettable epoxy resin before and/or during formation of the aqueous dispersion of the thermosettable epoxy resin. Additional stabilizer may be added to the aqueous dispersion after the aqueous dispersion is formed. For example, in embodiments of the invention, all or a portion of the colloidal stabilizer may be admixed with the thermosettable epoxy resin before formation of the aqueous dispersion, and any remaining portion of the colloidal stabilizer, or additional colloidal stabilizer, either the same or different from the previously added colloidal stabilizer, may be admixed with the thermosettable epoxy resin after formation of an aqueous dispersion of the resin.

In accordance with the present invention, the thermosettable epoxy resin in the aqueous dispersion which is to be spray dried may have an average particle size of from 0.05µm to 5µm, preferably from 0.1µm to 3µm, most preferably from 0.15µm to 2µm.

The redispersible polymer powder of the present invention is prepared from an aqueous dispersion comprising the thermosettable epoxy resin, the colloidal stabilizer comprising the polyvinyl alcohol, and optional components. The aqueous dispersions, which refers generically to a stable dispersion or emulsion of polymer microparticles in an aqueous medium, obtained in the present invention may generally have a solids content of from 30% to 75% by weight, for example between 35% and 65% by weight, preferably from 40% to 60% by weight.

To prepare the redispersible polymer powder the aqueous dispersion is dried, for example by spray drying, freeze drying or fluidized-bed drying. Preferably the aqueous dispersion is spray dried. The solids content of the dispersion to be spray-dried may generally be from 25% to 65% by weight, for example from 35% by weight to 55% by weight, preferably from 40% to 50% by weight, based on the total weight of the dispersion. In embodiments of the invention, since colloidal stabilizer is already included during the dispersion process, for example during the mechanical dispersion, it may not be necessary to add additional colloidal stabilizer to the dispersion for spray drying. In other embodiments, spray drying may be performed after addition of the colloidal stabilizer comprising the polyvinyl alcohol during the dispersion process to form a dispersion, and then for spray drying, additional PVOH and/or any optional additional one or more protective colloids may be added to the PVOH containing dispersion as a spraying aid to the dispersion. Any additional colloidal stabilizer added to the dispersion for spray drying, is preferably in the form of an aqueous solution. Addition can proceed in any manner as long as a homogenous dispersion mixture is obtained. Further additives such as surfactants and defoamers, and fillers may be employed, if desired, and the further additives are preferably added in conventional amounts to the aqueous dispersion before drying. For example, an antifoamer may be employed in an amount of up to 1.5% by weight, based on the weight of the polymer particles. In embodiments of the invention, conventional superplasticizers may be employed in an amount of at least 0.01% by weight, preferably from 5% by weight to 15% by weight, based upon the weight of the water redispersible polymer powder (RDP).

The spray drying can take place in conventional spray drying systems, for example a dispersion may be atomized by using single, twin or multifluid nozzles or a rotating disk in a stream of drying gas which may be heated. In general, air, nitrogen or nitrogen enriched air is employed as the drying gas, the drying gas temperature generally not exceeding 250°C. The drying temperature preferably is from 110 to 180°C, more preferably from 130 to 170°C. The product outlet temperature may generally be from 30°C to 120°C, preferably from 40°C to 90°C, depending on the plant, the Tg of the polymeric composition, and the desired degree of drying.

An anticaking agent (antiblocking agent) may be added to the polymer powder to increase storage stability, for example in order to prevent caking and blocking and/or to improve the flow properties of the powder. This addition is preferably carried out as long as the powder is still finely dispersed, for example still suspended in the drying gas. The anticaking agent is preferably of mineral origin. It is preferably added in an amount of up to 40% by weight, based on the total weight of polymeric constituents. Examples of anticaking agents include but are not limited to kaolin, calcium carbonate, magnesium carbonate, talc, gypsum, silica and silicates, and mixtures thereof. The particle sizes of the anticaking agents are preferably in the range of from 100nm to 10µm. A preferred anticaking agent is kaolin.

The X50 size of the particle size distribution of the redispersible powder depends on drying conditions and drying equipment. X50 represents the median diameter in micrometers, which means that 50% by weight of the particles are smaller than this diameter. The produced water-redispersible polymer powder preferably has an X50 particle size diameter of from 5 to 100 micrometers, preferably from 20 to 90 micrometers, most preferably from 50 to 80 micrometers. The particle size distribution of the powder can be measured by laser diffraction using a particle size analyzer "Sympatec Helos" at a measuring range of 1.8 - 350 µm and dispersing the powder by compressed air.

The weight of the polymer particles in the powder, for example, weight of the thermosettable epoxy resin described herein in the powder, may preferably be from 40% by weight to 95% by weight, more preferably from 65% by weight to 85% by weight, of the total weight of the water-redispersible polymer powder.

The redispersible polymer powders, which may have an average particle size of from 5 to 100 micrometers, for example from 10µm to 25µm particle size, may be readily dispersed into deionized water to provide an original thermosettable epoxy resin particle size distribution, such as from 0.05µm to 5µm, preferably from 0.1µm to 3µm, most preferably from 0.15µm to 2µm.

The redispersible polymer powder of the present invention can easily be redispersed in water and the reactivity of the epoxy resin is not influenced negatively by the high temperatures during the drying process. The easy redispersibility of the polymer powder and the possibility of the epoxy resin to harden under alkaline conditions without the necessity to add an epoxy resin hardener makes the polymer powder ideal as an additive to a variety of building materials to improve their hydraulic stability and other mechanical and chemical properties, such as compression, abrasion resistance, chemical and solvent resistance. In embodiments of the invention, although curing of the redispersible epoxy powder by cement ingredients is preferred, a hardener or curing agent, such as a polyfunctional amine, mercaptan, polyfunctional acid, or acid anhydride, may be dry mixed with the spray dried powder, or incorporated into a cement-epoxy powder in conventional effective curing amounts.

The building materials generally comprise an inorganic hydraulic binding agent. Thus, the present invention is also directed to a composition comprising an inorganic hydraulic binding agent and the redispersible powder as described above. Typically, the inorganic hydraulic binding agent is cement or calcium sulfate hemihydrate (plaster of Paris), preferably cement. Examples of suitable cements include Portland cement, alumina cement, pozzolanic cement, slag cement, magnesia cement and phosphate cement. As the epoxy resin in the redispersible polymer powder is preferably cured by cement ingredients without the addition of an epoxy resin curing agent such as an amine, mercaptan, anhydride or acid curing agent, the composition comprising an inorganic hydraulic binding agent and the redispersible powder may be free of any curing agent, such as an amine curing agent, for the epoxy resin.

The ability to add an epoxy resin to a building material in the form of the present redispersible polymer powder provides a composition which is a ready-to-use dry mix. The redispersible polymer powder can already be mixed with the hydraulic binding agent and additional components such, as for example, sand to produce a one-component system for the end user. At the construction site only water has to be added and no annoying dosing of other ingredients is necessary. In embodiments of the invention, the composition which includes an inorganic hydraulic binding agent and the redispersible powder may result in a pH of at least 11 after addition of water. The alkaline environment then causes curing of the epoxy resin contained in the composition. In addition to PVOH, additional surfactants may be used to help the dispersion of the epoxy resin, such as E-SPERSE 100, a high temperature active surfactant available from Ethox Chemicals LLC, Greenville, SC 29606

The hardener-free compositions of the present invention exhibit superior storage stability as no additional hardener that may already react undesirably during storage is present. Typical building materials wherein the redispersible polymer powder of the present invention may be used are one-component hardener-free dry mixes containing an inorganic hydraulic binding agent, preferably a one-component hardener-free cement-containing dry mix. More specific illustrative examples of building materials wherein the redispersible polymer powder can be used include mortars, tile or board adhesives, gypsum or cement plasters or renders, decorative renders, self-leveling flooring compositions, one-component sealants and exterior insulation finishing systems. The corresponding hardened building materials obtained from materials including the redispersible polymer powder of the present invention exhibit good adhesion strength also after immersion in water (water resistance), chemical resistance, and stain resistance.

The water-redispersible polymer powder compositions of the present invention have a variety of uses. In embodiments of the invention, the thermosettable, curable, or hardenable epoxy resin redispersible polymer powder compositions of the present invention may be employed in blends with one or more acrylic redispersible polymer powders (RDPs), VAE RDPs, VAE/VeoVA RDPs, polyurethane RDPs, polyolefin dispersion based RDPs, and mixtures thereof. The powders of the present invention may be employed as functional additives in a wide variety of compositions such as construction materials, personal care compositions, pharmaceutical compositions, and agricultural compositions, in high salt concentration applications or environments, such as off-shore oil well cementing, oil and gas drilling and cementing, and in hard water. Additional uses of the powders are in waste management applications, such as compositions for synthetic covers for bulk material piles, such as waste, coal sludge containment, soil, soil erosion control, which minimize water infiltration, nuisance fugitive dust, odor, and affinity to birds. The powders may be used in alternative landfill covers that are sprayable, use inexpensive widely available and environmentally friendly recycled materials, have good adherence to plastics and glass waste, and can form/harden within a short time, and in adhesion enhancing admixtures. The powders may also be employed in the production of foams, such as polyurethane foams.

Preferably, the water-redispersible polymer powder may be used as an additive in a setting composition which may further include an inorganic hydraulic binder. Examples of inorganic binders include cements, such as Portland cement, alumina cement, pozzolanic cement, slag cement, magnesia cement and phosphate cement; gypsum hemihydrate and water-glass. Illustrative uses of the polymer composition according to the present invention are in tile adhesives, construction adhesives, renders, joint mortars, plasters, troweling compositions, filling compositions, such as floor filling compositions (e.g. self-leveling flooring compounds), concrete repair joints, joint mortars, tape joint compounds, concrete, water proofing membrane applications, crack isolation membrane applications, and additives for ceramic processing. In particular, the use of the water-redispersible polymer powder described herein in a setting composition, e.g. in cement-based tile adhesives or in external thermal insulation composite systems, result in compositions with high initial adhesion strength, high adhesion strength after immersion in water (water resistance), chemical resistance, stain resistance, and high adhesion strength after allowing a certain "open time" before final application of the hydrated setting composition. In embodiments of the invention, the water-redispersible polymer powder may be employed as a binder for slip casting, of for example raw materials such as silica, alumina, alkali metal oxides, and alkaline earth metal oxides.

A preferred use of the water-redispersible polymer powder is in cementitious or hydraulic compositions or other compositions which exhibit a high pH, for example a pH of at least 11, for example from 11.5 to 13.5. The redispersible polymer powders of the present invention may be employed in mortar repair or grout compositions, tile adhesives, such as cement-based tile adhesives. Cement-based tile adhesives may generally comprise 5 to 50 parts by weight of cement, preferably Portland cement, as the hydraulic binder; 40 to 70 parts by weight of quartz sand, preferably having a particle size of from 0.1mm to 0.5mm, as the main filler, and 0.1% to 10% by weight, preferably 1% to 6% by weight (based on the dry weight of the tile adhesive) of the redispersible polymer powder composition according to the present invention. Further optional components include one or more cellulose ethers (preferably in a total amount of 0.05% to 1% by weight, more preferably 0.2% to 0.5% by weight, based on the dry weight of the tile adhesive) to control rheology, water retention, slip resistance and improved workability; quartz or lime stone powder having a particle size of from 30µm to 60µm as fine co-filler to improve consistency and workability; and cellulose or mineral fibers to improve the slip resistance.

Another use of the water-redispersible polymer powders is in self- leveling flooring compounds SLFC. The powders may be added to improve the adhesion to the substrate, the flexibility, the abrasion resistance and the aging properties. The SLFC may generally include the same components in the same amounts as employed in the CBTAs. A retarder or retardant, such as trisodium citrate (TriNa-Citrate), such as Censperse PC13 available from Newchem AG, Pfäffikon, Switzerland, may be employed in conventional amounts generally employed in SLFC. The SLFC may also include calcium sulfate (gypsum), an accelerator, such as lithium carbonate, and a liquefier, dispersant, or superplasticizer, such as a water soluble co-polymer dispersant, such as MELFLUX 2651F, which is based on modified polycarboxylate technology and produced by BASF Construction Polymers, Kennesaw GA, in conventional amounts. In other embodiments, the water-redispersible polymer powder may be used in external thermal insulation systems ETICS, particularly as an adhesive on the thermally insulating board layer to reduce the water absorption and improve the impact resistance of the external thermal insulation system.

Furthermore, the water-redispersible polymer powder according to the present invention may be used in paper products, paperboard products, carpet backing, paints or coatings or in binders for wood, paper or textiles coatings or impregnating compositions, preferably in the absence of a substantial amount of an inorganic hydraulic binding agent, more preferably in the absence of any amount of an inorganic hydraulic binding agent. For example, the water-redispersible polymer powder may be used as the sole binder in coating compositions and adhesives. In embodiments of the invention, the water redispersible polymer powders may be used in automotive applications.

The following examples are provided for illustrative purposes only and are not intended to limit the scope of the claims that follow. Unless otherwise indicated, all parts and percentages are by weight, all temperatures are in °C, and all pressures are in bars or atmospheric unless otherwise indicated to the contrary:

### EXAMPLE 1

A redispersible polymer powder was produced by first preparing an aqueous dispersion of a thermosettable, non-crosslinked, non-hardened epoxy resin. The aqueous dispersion was prepared by charging: a) 50 gm of D.E.R. 664U epoxy resin, and b) 35g of Mowiol 4-88 polyvinyl alcohol solution (non-volatiles content, NV=28% by weight), which is about 19.6% by weight PVOH based upon the weight of the epoxy resin, to a 300ml PARR reactor having a stirrer blade with serrated teeth.

D.E.R. 664U, is a solid epoxy resin of medium molecular weight, which is the solid reaction product of epichlorohydrin and bisphenol A, having a glass transition temperature of 61°C, commercially available from The Dow Chemical Company, Midland, Michigan, U.S.A.. The D.E.R. 664U has an epoxide equivalent weight of 875g/eq to 955g/eq as measured by ASTM D-1652, an epoxide percentage of 4.9% to 5.2%, as measured by ASTM D-1652, an epoxide group content of 1140mmol/kg to 1220 mmol/kg as measured by ASTM D-1652, a solution viscosity @ 25°C of 500cSt to 900cSt (40 wt% in diethylene glycol monobutyl ether as measured by ASTM D-445, a melt viscosity @ 150°C of 4,000cSt to 8,000 cSt as measured by ASTM D-445, a softening point of 100°C to 110°C as measured by ASTM D-3104, a color (Platinum Cobalt) of 100 Max.(40 wt% in diethylene glycol monobutyl ether) as measured by ASTM D-1209, and a shelf life of 24 months.

The MOWIOL 4-88 is an unmodified PVOH. It is a partially hydrolyzed PVOH (polyvinylalcohol) in granular form, and is available from Kuraray Europe GmbH, Division PVA/PVB D-65926 Frankfurt am Main, Germany. The MOWIOL 4-88 has a viscosity DIN 53015 of 4 ± 0.5 mPa-s (4% aqueous solution at 20°C), a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O).

The reactor was sealed and heated to 140°C, and after attaining that temperature the mixture was stirred for 2-3 minutes to mix the epoxy and PVOH solution together at about 1810 rpm to obtain a substantially homogeneous mixture. To this mixture, water was added using a HPLC pump at the rate of 2ml/minute for 20 minutes. The water addition rate was increased to 10ml/ minute for the next 6.5 minutes while the heating mantle was removed and a stream of air was introduced outside of the PARR reactor for cooling. Water addition was with stirring to obtain a substantially homogeneous mixture. The temperature dropped to about 95°C after addition of all of the water. The reactor was cooled to room temperature and the product was discharged for making redispersible powders. The final thermosettable epoxy dispersion had the composition shown in Table 1:

**TABLE 1: Composition of Final Thermosettable Epoxy Dispersion**

| | |
|---|---|
| D.E.R. 664U | 50g |
| Mowiol 4-88 PVA solution (28%) | 35g |
| Water ( added under stirring) | 105g |

The final thermosettable epoxy dispersion of D.E.R. 664 was pumped to a two-fluid nozzle atomizer equipped on a Mobile Minor spray dryer. The air pressure to the nozzle was fixed at 1 bar with 50% flow which is equivalent to 6 kg/hr of air flow. The spray drying was conducted in an N₂ environment with an inlet temperature fixed at 140°C, and the outlet temperature was targeted to 50 ± 1°C by tuning the feed rate of the mixture. Concurrently, kaolin powder (KaMin Hg 90) was added into the chamber as an anti-caking agent, with the amount being controlled to be 10% by weight of the dry powders. The mixture has a total solids content of about 33.8% by weight, based upon the total weight of the mixture.

The redispersible polymer powder obtained by the spray drying had an average particle size between 10µm to 20µm.

The spray dried powder was redispersed into deionized water at 1% solids and vortexed for 30 seconds twice. The redispersion was then measured by use of a Coulter LS 230 particle size analyzer. Through the spray drying, free flowing powders were collected in collection jars, and limited chamber deposition was observed. The particle size distribution of the thermosettable epoxy resin in the initial dispersion, which was prior to spray drying, ranged from about 0.3µm to about 12µm particle diameter, with the average particle diameter being about 1.5µm. The particle size distribution of the redispersion, which was after spray drying and redispersing the RDP in water, also ranged from about 0.3µm to about 12µm particle diameter, with the average particle diameter being about 1.5µm. The data indicated that these powders were readily dispersed to the original thermosettable epoxy resin or latex particle size distribution.

### EXAMPLE 2

The components and their relative amounts (% by weight or parts by weight, pbw) which may be used to prepare a cement-based mortar composition using the redispersible powder composition of Example 1 is shown in Table 1, below. The cement-based mortar composition may be prepared by dry blending the solid components indicated in Table 2, and then adding water. The cement and the redispersible polymer powder may be placed in a 150 ml labor glass and mixed with a spatula for a half minute. Then water may be added and stirred with the spatula for 3 minutes. The temperature during the mixing may be 21°C.

**TABLE 2: Cement-based Mortar Formulation**

| RAW INGREDIENT | FORMULA, WT% |
|---|---|
| Portland Cement Type 1 42.5 | 95 |
| Redispersible Epoxy Polymer Powder (RDP) of Example 1 | 5 |
| Total Dry Mix, % by weight | 100 |
| Water | 37 |

The admixing with the water may cause the Portland Cement to harden, cure, or crosslink the epoxy resin of the RDP to enhance hydraulic stability and other mechanical and chemical properties, such as compression, abrasion resistance, chemical and solvent resistance of the cement-based mortar formulation.

### EXAMPLE 3

A batch-wise dispersion procedure for the preparation of an epoxy dispersion in a PARR reactor can rapidly screen different dispersion formulations. In this Example, the effect of different polyvinyl alcohols and their amounts were tested and the effect of epoxy resin glass transition temperature (Tg) on redispersibility are demonstrated. A PARR stainless steel pressure reactor (300 mL) with a 2.625" inside diameter and a Cowles blade, equipped with an optional pulley system to allow mixer speeds of up to 1825 rpm was employed. To make the dispersions 50.0g of epoxy resin and various amounts of different types and amounts of PVOH (e.g. 18.5g of PVOH MOWIOL 4-88 solution with a solid content of 27 wt% provides 5g of PVOH) were charged into the 300 mL PARR pressure reactor. The stirrer assembly was inserted into the vessel and turned by hand until it spun freely. The PARR reactor assembly was then loaded onto its ring stand and water hoses were attached to the stirrer's cooling sleeve. The thermocouples and stirrer motor were connected, and the heating mantle was lifted into place and tightened. With this mixer setup, the reactor was sealed and heated to 150 °C for D.E.R. 664U epoxy resin (100 °C for D.E.R. 661 epoxy resin), and after reaching the temperature the mixture was stirred for 10 minutes to allow sufficient mixing of the epoxy resin and PVOH solution at about 1825 rpm. To this mixture water was added using a HPLC pump at a rate of 1 mL/min for 30 minutes. The water addition rate was increased to 10 mL/min for 5 minutes while the heating mantle was removed and the PARR reactor was cooled by air and water. The reactor was cooled to 50 °C in a water bath, and stirring was maintained during the cooling process. The resultant dispersion was collected by filtration through a 190 µm filter.

The D.E.R. 664U epoxy resin having a Tg of 61°C of Example 1 was employed in accordance with the present invention, and D.E.R. 661, having a Tg of only 41°C was employed as a Comparative Example. D.E.R. 661 is a solid epoxy resin of low molecular weight, which is the solid reaction product of epichlorohydrin and bisphenol A, having a softening point of 75°C to 85°C as measured by ASTM D-3104, a Tg of 41°C, an epoxide equivalent weight of 500g/eq to 560g/eq as measured by ASTM D-1652, an epoxide percentage of 7.7% to 8.6%, as measured by ASTM D-1652, an epoxide group content of 1780mmol/kg to 2000 mmol/kg as measured by ASTM D-1652, a solution viscosity @ 25°C of 165cSt to 250cSt (40 wt% in diethylene glycol monobutyl ether as measured by ASTM D-445, a melt viscosity @ 150°C of 400cSt to 800 cSt as measured by ASTM D-4287, a softening point of 100°C to 110°C as measured by ASTM D-3104, a color (Platinum Cobalt) of 100 Max.(40 wt% in diethylene glycol monobutyl ether) as measured by ASTM D-1209, and a shelf life of 24 months.

### Spray Drying

For spray drying experiment, a two-fluid nozzle atomizer was equipped on a Mobile Minor spray dryer (GEA Niro). The air pressure to the nozzle was fixed at 1 bar with 50 % flow which is equivalent to 6 kg/hr of air flow. A glass jar was placed under the cyclone with the valve on the bottom of the cyclone open. Epoxy dispersion (30-40 wt% solid content) was pumped into the heated chamber by a feed pump. The spray drying was conducted in an N₂ environment with an inlet temperature fixed at 140°C, and the outlet temperature was targeted at 50 °C by tuning the feed rate of the dispersion. Meanwhile, clay powder (KaMin HG-90) was fed into the chamber as an anti-caking agent. Polymer dispersion was atomized by high air pressure at the nozzle atomizer. Water droplets were dried quickly in the heated chamber before reaching the outlet temperature. Vacuum fan was constantly pulling nitrogen/moisture out of the chamber, and most dry polymer powder was recovered in the glass jar attached on the cyclone. Extra polymer powder was finally collected in the filter before ventilation. The dry powder shows an average particle size between 10 and 30 µm.

### Particle Size Analysis and Redispersibility Determination

The dry powders were dispersed into deionized (DI) water at 1% by weight solids and vortexed for 30 seconds twice. The particle size in the redispersion was then measured by a Coulter LS 230 Laser Light Scattering Particle Size analyzer, using an epoxy resin model predetermined by the instrument software.

The dry powder is dispersed into DI water at 1% by weight solids to form a re-dispersion. The redispersibility is defined as the volume percentage of epoxy particles below 2 micron in the re-dispersion. For instance, if the re-dispersion shows 10% by volume of the particles being below 2 micron by volume, the redispersibility of this sample is 10%.

The glass transition temperatures (Tgs) of DER664U resin and DER664U RDP are 61°C and 59°C, respectively; and the Tgs of DER661 resin and spray dried powder are 41°C and 39°C, respectively. The epoxy resin type, PVOH type, Tg of the epoxy resin, initial water content, mean particle size, and redispersibility for the dispersions produced in the batch process are summarized in Table 3:

**TABLE 3: Epoxy Resin Dispersions and Redispersibility**

| Epoxy resin | | PVOH | | Initial water(g) | Mean particle Size (µm) | Redispersibility (%) |
|---|---|---|---|---|---|---|
| Type, T_{g} | Wt(g) | Type | Weight(g) | | | |
| 664U, 61°C | 50 | 4-88 | 5 | 13.0 | 0.51 | 100 |
| 664U, 61°C | 50 | 4-88 | 10 | 25.6 | 0.45 | 100 |
| 664U, 61°C | 50 | 4-88 | 7.5 | 19.3 | 0.46 | 100 |
| 664U, 61°C | 50 | 4-88 | 5 | 13.0 | 0.44 | 100 |
| 664U, 61°C | 50 | 4-88 | 3.8 | 9.8 | 0.59 | 100 |
| 664U, 61°C | 50 | 8-88 | 5 | 15.0 | 0.53 | 100 |
| 664U, 61°C | 50 | 1-80 | 7.5 | 9.2 | 0.33 | 100 |
| 664U, 61°C | 50 | 18-88 | 5 | 20.0 | 0.49 | 100 |
| 661, 41°C | 50 | 4-88 | 5 | 13.0 | 0.44 | 10 |

The above dispersions of Table 3 were spray dried with an outlet temperature of 50 °C. As shown in Table 3, at least 7.5 wt% PVOH to epoxy resin formed a good dispersion, and the quality of the dispersion was not affected by the type of PVOH. The type of PVOH in Table 3 is characterized by the viscosity (of a 4% aqueous solution at 20°C) in mPa·s, degree of hydrolysis (saponification) in mol.-%. For example, the PVOH 4-88 has a viscosity (of a 4% aqueous solution at 20°C) of about 4 mPa·s, and a degree of hydrolysis (saponification) of about 88 mol.-%, such as MOWIOL 4-88, available from Kuraray Europe GmbH, Division PVA/PVB D-65926 Frankfurt am Main, Germany. Also, shown in Table 3, the dispersions made with D.E.R. 664U having a Tg of 61°C was converted into powder with 100 % redispersibility, whereas the dispersion made with D.E.R. 661 having a Tg of only 41°C was converted into powder with only 10% redispersibility.

### EXAMPLE 4

In this example, an epoxy dispersion is made by extrusion of D.E.R. 664U epoxy resin (T_{g} of 61°C)of Examples 1-3, and MOWIOL 18-88 polyvinyl alcohol (PVOH). MOWIOL 18-88, is a commercially available PVOH from Kuraray Europe GmbH, Division PVA/PVB D-65926 Frankfurt am Main, Germany. MOWIOL 18-88, is a partially hydrolyzed PVOH (polyvinylalcohol) in granular form, having a viscosity DIN 53015 of 18 ± 1.5 mPa-s (4% aqueous solution at 20°C), a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O). Since solid PVOH is not miscible with epoxy resin and dissolution of solid PVOH is slow, an aqueous solution of polyvinyl alcohol (18.2% solid, PVOH 18-88) was delivered to the initial water (IA) injector to disperse the D.E.R. 664U. The extrusion was performed using a Bersdorff extruder. The DER664U was fed by a loss-in-weight feeder. The melt zone of the extruder was maintained at 75 °C below the softening temperature of the epoxy resin (100 °C) to prevent epoxy resin flakes from caking at the bottom of the feed throat and the melt seal from rupturing. The PVOH 18-88 solution was delivered by a pair of 500 mL Isco syringe pumps. The PVOH solution was too viscous to load by suction, and was poured into the empty Isco tubes, using a 0.5 inch diameter transfer line between the pump and the extruder to prevent high pressure from building up. The barrel temperatures were all initially set to 130 °C and subsequently reduced. A melt zone temperature of 75 °C, an emulsification zone of 110 °C and a dilution zone of 100 °C was employed to produce the smallest amount of grit. The front end heaters on the Bersdorff extruder remained on during the run set to 180°C. The dilution and IA heaters were not used for this run.

The composition and the properties of the dispersion produced by the extrusion process are summarized in Table 4:

**TABLE 4: Composition and Properties of Extruded Epoxy Dispersion**

| | |
|---|---|
| Relative Amount of D.E.R. 664U Epoxy Resin | 92.5g |
| Tg of D.E.R. 664U Epoxy Resin | 61°C |
| Relative Amount of PVOH18-88 | 7.5g |
| Temperature | 110°C |
| pH | 5.14 |
| Solid (wt%) | 40.7% |
| Viscosity at 20 °C | 166 cP |
| Mean size (µm) | 1.29 |

Spray drying of the aqueous dispersion, particle size analysis, and redispersibility were conducted as in Example 3. The dispersion was converted into powder with 100 % redispersibility. The glass transition temperature (Tg) of the D.E.R. 664U RDP was 59°C. The particle size of the prepared dispersions is typically below 2 micron.

## Claims

1. A water redispersible polymer powder (RDP) comprising a co-dried admixture of a thermosettable epoxy resin and a colloidal stabilizer, wherein said thermosettable epoxy resin is a polyglycidyl ether of a polyhydroxy compound having a glass transition temperature (T_{g}) of at least 50°C, and said colloidal stabilizer being capable of dispersing the epoxy resin at a temperature above the T_{g} of the epoxy resin, the amount of the colloidal stabilizer being at least 2% by weight, based upon the weight of the thermosettable epoxy resin, provided that said thermosettable epoxy resin is not an oligomer or polymer obtained by free radical polymerization of monomer mixtures comprising ethylenically unsaturated epoxy compounds.

2. A water redispersible polymer powder as claimed in claim 1 wherein the colloidal stabilizer comprises polyvinyl alcohol in an amount of at least 2% by weight, based upon the weight of the thermosettable epoxy resin.

3. A water redispersible polymer powder as claimed in claim 2 wherein the amount of polyvinyl alcohol is from 5% by weight to 35% by weight, based upon the weight of the thermosettable epoxy resin, the polyvinyl alcohol is partially hydrolyzed, and the thermosettable epoxy resin has a glass transition temperature (Tg) of at least 55°C.

4. A water redispersible polymer powder as claimed in claim 1 which does not contain a curing agent or hardener for the epoxy.

5. A water redispersible polymer powder as claimed in claim 4 wherein the epoxy resin is a linear, non-cross-linked polymer of bisphenol A or bisphenol F and epichlorohydrin having terminal epoxide groups.

6. A water redispersible polymer powder according to any of the preceding claims, comprising the thermosettable epoxy resin in an amount from 40 to 95% by weight, based upon the total weight of the water redispersible polymer powder.

7. A method for producing a water redispersible polymer powder comprising drying an aqueous mixture of a thermosettable epoxy resin which is a polyglycidyl ether of a polyhydroxy compound having a glass transition temperature (Tg) of at least 50°C, and a colloidal stabilizer to obtain a water redispersible polymer powder without curing or hardening of the epoxy resin, wherein the colloidal stabilizer is capable of dispersing the epoxy resin at a temperature above the Tg of the epoxy resin, the amount of the colloidal stabilizer being at least 2% by weight, based upon the weight of the thermosettable epoxy resin, provided that said thermosettable epoxy resin is not an oligomer or polymer obtained by free radical polymerization of monomer mixtures comprising ethylenically unsaturated epoxy compounds.

8. A method for producing a water redispersible polymer powder as claimed in claim 6 wherein the colloidal stabilizer comprises polyvinyl alcohol in an amount of at least 2% by weight, based upon the weight of the thermosettable epoxy resin, the thermosettable epoxy resin has a glass transition temperature (Tg) of at least 55°C, and the epoxy resin is a linear, non-cross-linked polymer of bisphenol A and epichlorohydrin having terminal epoxide groups.

9. A method for producing a water redispersible polymer powder as claimed in claim 6 wherein the aqueous mixture of the thermosettable epoxy resin is obtained by mechanical dispersion of the thermosettable epoxy resin to obtain an epoxy resin dispersion and admixing the epoxy resin dispersion with the colloidal stabilizer.

10. A method for making a cement composition comprising admixing cement ingredients with a water redispersible polymer powder as claimed in claim 1.

11. A dry mix composition comprising cement ingredients and a water redispersible polymer powder as claimed in claim 1 in an amount of at least 0.1% by weight, based upon the weight of the dry mix formulation.

12. A dry mix composition as claimed in claim 10 wherein the redispersible polymer powder is cured, crosslinked, or hardened by the cement ingredients when the dry mix composition is admixed with water.

## Patentansprüche

1. Ein Wasser-redispergierbares Polymerpulver (RDP), das ein cogetrocknetes Gemisch aus einem hitzehärtbaren Epoxidharz und einem Kolloidstabilisator beinhaltet, wobei das hitzehärtbare Epoxidharz ein Polyglycidylether einer Polyhydroxyverbindung mit einer Glasübergangstemperatur (Tg) von mindestens 50 °C ist und der Kolloidstabilisator fähig ist, das Epoxidharz bei einer Temperatur über der Tg des Epoxidharzes zu dispergieren, wobei die Menge des Kolloidstabilisators mindestens 2 Gew.-%, bezogen auf das Gewicht des hitzehärtbaren Epoxidharzes, beträgt, vorausgesetzt, dass das hitzehärtbare Epoxidharz kein Oligomer oder Polymer ist, erhalten durch Radikalpolymerisation von Monomermischungen, beinhaltend ethylenisch ungesättigte Epoxyverbindungen.

2. Wasser-redispergierbares Polymerpulver gemäß Anspruch 1, wobei der Kolloidstabilisator Polyvinylalkohol in einer Menge von mindestens 2 Gew.-%, bezogen auf das Gewicht des hitzehärtbaren Epoxidharzes, beinhaltet.

3. Wasser-redispergierbares Polymerpulver gemäß Anspruch 2, wobei die Menge des Polyvinylalkohols von 5 Gew.-% bis 35 Gew.-%, bezogen auf das Gewicht des hitzehärtbaren Epoxidharzes, beträgt, der Polyvinylalkohol teilhydrolysiert ist und das hitzehärtbare Epoxidharz eine Glasübergangstemperatur (Tg) von mindestens 55 °C aufweist.

4. Wasser-redispergierbares Polymerpulver gemäß Anspruch 1, das kein Härtungsmittel oder keinen Härter für das Epoxy enthält.

5. Wasser-redispergierbares Polymerpulver gemäß Anspruch 4, wobei das Epoxidharz ein lineares, nicht vernetztes Polymer von Bisphenol A oder Bisphenol F und Epichlorhydrin mit terminalen Epoxidgruppen ist.

6. Wasser-redispergierbares Polymerpulver gemäß einem der vorhergehenden Ansprüche, das das hitzehärtbare Epoxidharz in einer Menge von 40 bis 95 Gew.-%, bezogen auf das Gesamtgewicht des Wasser-redispergierbaren Polymerpulvers, beinhaltet.

7. Ein Verfahren zum Produzieren eines Wasser-redispergierbaren Polymerpulvers, wobei das Verfahren das Trocknen einer wässrigen Mischung eines hitzehärtbaren Epoxidharzes, das einen Polyglycidylether einer Polyhydroxyverbindung mit einer Glasübergangstemperatur (Tg) von mindestens 50 °C ist, und eines Kolloidstabilisators beinhaltet, um ein Wasser-redispergierbares Polymerpulver ohne Härten oder Abbinden des Epoxidharzes zu erhalten, wobei der Kolloidstabilisator fähig ist, das Epoxidharz bei einer Temperatur über der Tg des Epoxidharzes zu dispergieren, wobei die Menge des Kolloidstabilisators mindestens 2 Gew.-%, bezogen auf das Gewicht des hitzehärtbaren Epoxidharzes, beträgt, vorausgesetzt, dass das hitzehärtbare Epoxidharz kein Oligomer oder Polymer ist, erhalten durch Radikalpolymerisation von Monomermischungen, beinhaltend ethylenisch ungesättigte Epoxyverbindungen.

8. Verfahren zum Produzieren eines Wasser-redispergierbaren Polymerpulvers gemäß Anspruch 6, wobei der Kolloidstabilisator Polyvinylalkohol in einer Menge von mindestens 2 Gew.-%, bezogen auf das Gewicht des hitzehärtbaren Epoxidharzes, beinhaltet, das hitzehärtbare Epoxidharz eine Glasübergangstemperatur (Tg) von mindestens 55 °C aufweist und das Epoxidharz ein lineares, nicht vernetztes Polymer von Bisphenol A und Epichlorhydrin mit terminalen Epoxidgruppen ist.

9. Verfahren zum Produzieren eines Wasser-redispergierbaren Polymerpulvers gemäß Anspruch 6, wobei die wässrige Mischung des hitzehärtbaren Epoxidharzes durch mechanische Dispersion des hitzehärtbaren Epoxidharzes, um eine Epoxidharzdispersion zu erhalten, und Vermischen der Epoxidharzdispersion mit dem Kolloidstabilisator erhalten wird.

10. Ein Verfahren zum Herstellen einer Zementzusammensetzung, das das Vermischen von Zementkomponenten mit einem Wasser-redispergierbaren Polymerpulver gemäß Anspruch 1 beinhaltet.

11. Eine Trockengemischzusammensetzung, die Zementkomponenten und ein Wasser-redispergierbares Polymerpulver gemäß Anspruch 1 in einer Menge von mindestens 0,1 Gew.-%, bezogen auf das Gewicht der Trockengemischformulierung, beinhaltet.

12. Trockengemischzusammensetzung gemäß Anspruch 10, wobei das redispergierbare Polymerpulver durch die Zementkomponenten gehärtet, vernetzt oder abgebunden wird, wenn die Trockengemischzusammensetzung mit Wasser vermischt wird.

## Revendications

1. Une poudre de polymère redispersable dans l'eau (RDP) comprenant un mélange co-séché d'une résine époxy thermodurcissable et d'un stabilisant colloïdal, dans laquelle ladite résine époxy thermodurcissable est un éther polyglycidylique d'un composé polyhydroxy ayant une température de transition vitreuse (Tg) de 50 °C au moins, et ledit stabilisant colloïdal étant apte à disperser la résine époxy à une température supérieure à la Tg de la résine époxy, la quantité du stabilisant colloïdal étant de 2 % en poids au moins, rapporté au poids de la résine époxy thermodurcissable, à condition que ladite résine époxy thermodurcissable ne soit pas un oligomère ou polymère obtenu par polymérisation radicalaire de mélanges de monomères comprenant des composés époxy éthyléniquement insaturés.

2. Une poudre de polymère redispersable dans l'eau telle que revendiquée dans la revendication 1 dans laquelle le stabilisant colloïdal comprend de l'alcool polyvinylique dans une quantité de 2 % en poids au moins, rapporté au poids de la résine époxy thermodurcissable.

3. Une poudre de polymère redispersable dans l'eau telle que revendiquée dans la revendication 2 dans laquelle la quantité d'alcool polyvinylique va de 5 % en poids à 35 % en poids, rapporté au poids de la résine époxy thermodurcissable, l'alcool polyvinylique est en partie hydrolysé, et la résine époxy thermodurcissable a une température de transition vitreuse (Tg) de 55 °C au moins.

4. Une poudre de polymère redispersable dans l'eau telle que revendiquée dans la revendication 1, laquelle ne contient ni agent de traitement, ni durcisseur pour l'époxy.

5. Une poudre de polymère redispersable dans l'eau telle que revendiquée dans la revendication 4 dans laquelle la résine époxy est un polymère linéaire, non réticulé de bisphénol A ou de bisphénol F et d'épichlorhydrine présentant des groupes époxyde terminaux.

6. Une poudre de polymère redispersable dans l'eau selon n'importe lesquelles des revendications précédentes, comprenant la résine époxy thermodurcissable dans une quantité allant de 40 à 95 % en poids, rapporté au poids total de la poudre de polymère redispersable dans l'eau.

7. Une méthode pour produire une poudre de polymère redispersable dans l'eau comprenant le fait de faire sécher un mélange aqueux d'une résine époxy thermodurcissable, laquelle est un éther polyglycidylique d'un composé polyhydroxy ayant une température de transition vitreuse (Tg) de 50 °C au moins, et d'un stabilisant colloïdal afin d'obtenir une poudre de polymère redispersable dans l'eau sans traitement ni durcissement de la résine époxy, le stabilisant colloïdal étant apte à disperser la résine époxy à une température supérieure à la Tg de la résine époxy, la quantité du stabilisant colloïdal étant de 2 % en poids au moins, rapporté au poids de la résine époxy thermodurcissable, à condition que ladite résine époxy thermodurcissable ne soit pas un oligomère ou polymère obtenu par polymérisation radicalaire de mélanges de monomères comprenant des composés époxy éthyléniquement insaturés.

8. Une méthode pour produire une poudre de polymère redispersable dans l'eau telle que revendiquée dans la revendication 6 dans laquelle le stabilisant colloïdal comprend de l'alcool polyvinylique dans une quantité de 2 % en poids au moins, rapporté au poids de la résine époxy thermodurcissable, la résine époxy thermodurcissable a une température de transition vitreuse (Tg) de 55 °C au moins, et la résine époxy est un polymère linéaire, non réticulé de bisphénol A et d'épichlorhydrine présentant des groupes époxyde terminaux.

9. Une méthode pour produire une poudre de polymère redispersable dans l'eau telle que revendiquée dans la revendication 6 dans laquelle le mélange aqueux de la résine époxy thermodurcissable est obtenu par dispersion mécanique de la résine époxy thermodurcissable afin d'obtenir une dispersion de résine époxy et par mélange de la dispersion de résine époxy avec le stabilisant colloïdal.

10. Une méthode pour réaliser une composition de ciment comprenant le mélange d'ingrédients de ciment avec une poudre de polymère redispersable dans l'eau telle que revendiquée dans la revendication 1.

11. Une composition de mélange sec comprenant des ingrédients de ciment et une poudre de polymère redispersable dans l'eau telle que revendiquée dans la revendication 1 dans une quantité de 0,1 % en poids au moins, rapporté au poids de la formulation de mélange sec.

12. Une composition de mélange sec telle que revendiquée dans la revendication 10 dans laquelle la poudre de polymère redispersable est traitée, réticulée, ou durcie par les ingrédients de ciment lorsque la composition de mélange sec est mélangée avec de l'eau.
